# EUROPEAN PATENT APPLICATION

(11) **EP 4 685 934 A1**
(43) Date of publication of application: **28.01.2026**
(21) Application number: 25189654.4
(22) Date of filing: 15.07.2025
(51) Int. Cl.: H01M 10/659, H01M 10/613, H01M 10/653, H01M 10/6551, H01M 10/6555, H01M 10/647, H01M 10/643, H01M 50/211, H01M 50/209, H01M 50/213

(54) **BATTERY PACK WITH PHASE CHANGE MATERIAL (PCM) COMPOSITE**

(30) Priority: 25.07.2024 US 202463675283 P
(71) Applicant: Magna International Inc., Aurora, ON L4G 7K1 (CA)
(72) Inventor: Chakraborty, Anirban, TROY, MICHIGAN, 48098 (US); Knutzen, Julian, AURORA, ONTARIO, L4G 7K1 (CA)
(74) Representative: Witte, Weller & Partner Patentanwälte mbB

(57) **Abstract**

A battery pack (10; 110; 210; 310; 350; 410) includes: a plurality of battery cells (12); and a thermal conductive layer (30; 120; 220, 222; 320; 360) disposed between two battery cells (12) of the plurality of battery cells, and configured to transfer heat from each of the two battery cells. The thermal conductive layer includes expanded graphite (EG) impregnated with a phase change material (PCM). The PCM may include an organic and/or inorganic PCM material. A thin thermal insulation barrier (222), such as aerogel, may be sandwiched between two anisotropic EG/PCM composites for regulating temperature and to prevent thermal runaway.

## Description

### CROSS REFERENCE TO RELATED APPLICATIONS

This U.S. Non-Provisional Patent Application claims the benefit of U.S. Provisional Patent Application No. 63/675,283, filed July 25, 2024 the contents of which is incorporated herein by reference in its entirety.

### FIELD

The present disclosure relates generally to phase change materials (PCM) for battery thermal management (BTM) and flame retardancy.

### BACKGROUND

Thermal management is an important consideration for battery packs, such as batteries used in electrified vehicles (EVs). Flame retardancy, including prevention and mitigation of effects of battery fires is also important, especially for high-energy concentration batteries and/or batteries that may include volatile chemical compounds.

### SUMMARY

The present disclosure provides battery pack. The battery pack includes: a plurality of battery cells; and a thermal conductive layer disposed between two battery cells of the plurality of battery cells, and configured to transfer heat from each of the two battery cells. The thermal conductive layer includes expanded graphite (EG) impregnated with a phase change material (PCM).

These and other aspects of the present disclosure are disclosed in the following detailed description of the embodiments, the appended claims, and the accompanying figures.

### BRIEF DESCRIPTION OF THE DRAWINGS

Further details, features and advantages of designs of the invention result from the following description of embodiment examples in reference to the associated drawings.
FIGs. 1A - 1B show cut-away side and top views of a first battery pack having a conventional PCM thermal conductive layer.
FIGs. 2A - 2B show cut-away side and top views of a second battery pack, in accordance with the present disclosure.
FIGs. 3A - 3B show cut-away side and top views of a third battery pack, in accordance with the present disclosure.
FIG. 4 shows a fourth battery pack with nine prismatic LMO battery cells each separated by a Cu foam and paraffin composite PCM thermal conductive layer.
FIG. 5 shows a fifth battery pack with nine prismatic LMO battery cells each separated by a pure paraffin PCM thermal conductive layer.
FIG. 6 shows a graph illustrating temperature as a function of time for the fourth and fifth battery packs and for another battery pack with natural convection cooling.
FIGS. 7A - 7C show various assembly steps of a sixth battery pack, in accordance with the present disclosure.
FIG. 8 shows a graph of temperature over time for a battery module with natural air convection (NAC) cooling.
FIG. 9 shows a graph of temperature over time for a battery module with a cooling jacket of a rigid block-type LDPE material.
FIG. 10 shows a graph of temperature over time for a battery module with a cooling jacket of a flexible composite phase-change material.

### DETAILED DESCRIPTION

Referring to the drawings, the present invention will be described in detail in view of following embodiments.

The present disclosure provides solutions to improve battery thermal management (BTM) and flame retardancy in battery packs by incorporating expanded graphite (EG) and thermal barrier laminates into flexible phase change material (PCM) composites, deviating from conventional rigid, pure PCM solutions.

In some embodiments, conductive expanded graphite (EG) fillers are used to increase the inherently low thermal conductivity of a pure PCM. This improves heat dissipation to the heat sink, regulating a peak temperature of the battery cells under their safety limit. Styrene butadiene rubber (SBR) may be used as a binder for EG particles in an EG/paraffin PCM composite. The SBR may help to retain structural integrity and heat transfer properties of the material over thousands of PCM melt/freeze cycles. The EG may have a capillary microstructure, which helps to prevent leakage when the PCM is in a molten (liquid) state. The use of EG and SBR in 1:1 weight ratio with DI water as a dilutant yields a porous, conductive EG foam with unclogged micropores which can act as a host for the PCM material.

In some embodiments, the EG/PCM composites may include an anisotropic interstitial. This anisotropic interstitial may be configured to strike a balance between enhanced thermal dissipation to the heat sink and improved thermal insulation between adjacent cells. In some embodiments, compacting composite sheets of the EG/PCM using a pneumatic-vice may advantageously align graphene sheets perpendicular to the direction of the compressive force, resulting in high in-plane thermal conductivity kᵢₙ₋ₚₗₐₙₑ, in a direction aligned with the planes of the graphene sheets. The compacted composite sheets may also provide low out-of-plane thermal conductivity k_{out-of-plane} in a direction perpendicular to the plane of the aligned graphene sheets. Thermal energy follows the path of least resistance and is mainly transferred to the heat sink therebelow. This compacting may be especially advantageous for large-format battery packs that have a cold-plate attached to the bottom of the cover for Liquid Cooling. This compacting may be less relevant for small, swappable packs subjected to Forced Air Cooling (FAC) on all surfaces of the cover.

In some embodiments, a thin thermal insulation barrier (like aerogel) may be sandwiched between two anisotropic EG/PCM composites for regulating temperature and to prevent thermal runaway, e.g. in an accident where the battery pack is damaged. Ultra-low thermal conductivity of the thermal insulation barrier (such as thermal conductivity around 0.03 W/m-K) can help to prevent combustion flames from spreading from a damaged battery cell to adjacent cells. In case of an actual fire event, an Intumescent Fire Retardant (IFR) property of EG can be leveraged for suppressing combustion flames. Weak Van der Waal's forces between the graphene sheets (that compose the EG particles) break down under extreme heat causing the graphene layers in EG to expand. This swells up the EG creating a protective, insulating cover over the combustible PCM.

In some embodiments, the BTM module may include one or more polymers such as Low Density Polyethylene (LDPE) in trace amounts as additives to impart flexibility to the PCM composite structure. Such added polymers may improve shock/impact absorption of the cells in rough or bumpy terrain. For a battery pack with cylindrical cells, flexible PCM composites can improve the overall energy density and help in better integration of the pack with an air-cooling system.

For some applications, such as two-wheel vehicles with small (swappable) battery packs that are subjected to simple Forced Air Cooling (FAC) on two or more surfaces, a thermal insulation barrier may include only EG and the thin thermal insulation barrier (like aerogel). The additional cost and complexity of making the EG/PCM composite anisotropic may not be justified. Directional heat transfer may make less of a difference, especially where heat can be removed from two or more surfaces of the battery pack.

For other applications, such as four-wheel vehicles with large-format battery packs that use liquid cooling via a cold-plate affixed thereto, and where directional heat transfer plays a critical role, a thermal insulation barrier may advantageously include anisotropic EG and a thin thermal insulation barrier.

In some embodiments, the BTM module may include inorganic PCMs as a replacement for paraffin-based organic PCM material. Such inorganic PCM materials can further enhance the safety by preventing combustion flames altogether under accidental thermal events. Salt hydrates are inexpensive, possess high enthalpy of fusion (ΔH_{Fusion}) and are inherently non-flammable due to their high hydrous content.

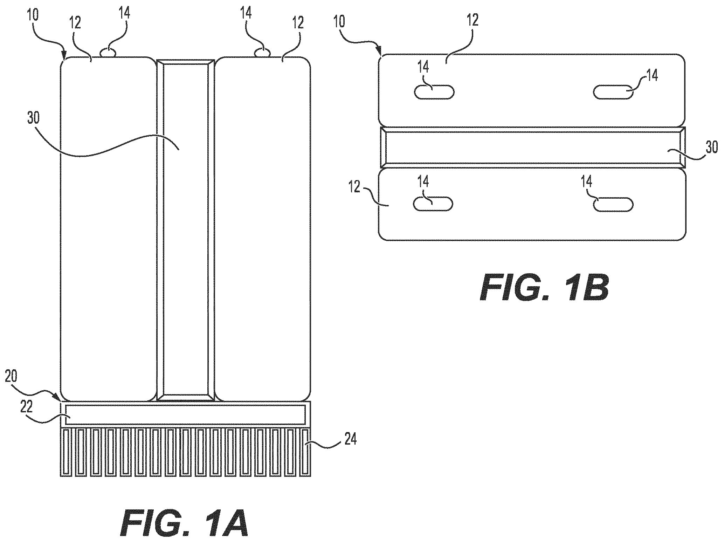

FIGs. 1A - 1B show cut-away side and top views of a first battery pack 10 having two battery cells 12 and a conventional PCM thermal conductive layer 30 disposed therebetween. Each of the battery cells 12 includes two electrical terminals 14 on a top surface thereof. A heat sink 20 is located adjacent to a lower edge of the battery cells 12, opposite from the electrical terminals. The heat sink 20 includes a plate 22 of thermally-conductive material, such as metal. The heat sink 20 also includes a plurality of fins 24 that protrude downwardly from the plate 22 opposite from the battery cells 12 for conducting heat away from the battery cells 12. The PCM thermal conductive layer 30 may be called an interstitial for its location in a space between the battery cells 12. The PCM thermal conductive layer 30 may include only PCM material, such as paraffin. The PCM thermal conductive layer 30 of the first battery pack 10 may provide relatively low thermal conductivity, resulting in poor heat dissipation to the heat sink 20 and causing undesirably high temperatures of the battery cells 12.

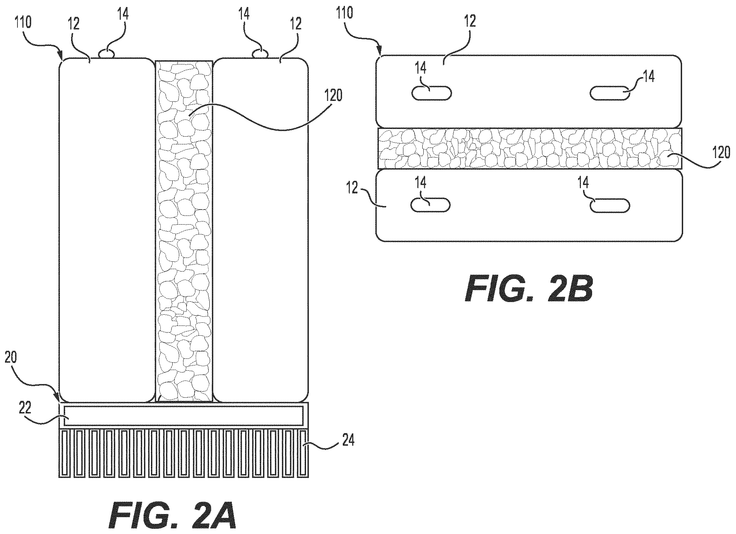

FIGs. 2A - 2B show cut-away side and top views of a second battery pack 110 of the present disclosure. The second battery pack 110 may be similar or identical to the first battery pack 10 except for a few differences described herein. The second battery pack 110 includes a first composite thermal conductive layer 120 in place of the conventional PCM thermal conductive layer 30. The first composite thermal conductive layer 120 includes expanded graphite (EG) impregnated with PCM material. The PCM material may include an organic PCM, such as a paraffin-based material. Additionally or alternatively, the PCM material may include an inorganic PCM material such as one or more salt hydrates. The first composite thermal conductive layer 120 may be called an EG/PCM composite. The first composite thermal conductive layer 120 provides a relative high thermal conductivity, which can enhance heat dissipation to the heat sink 20. It also promotes thermal exchange between neighboring battery cells 12 if one of the battery cells 12 overheat. This can propagate overheating between the battery cells 12 and create an undesirable cascading event.

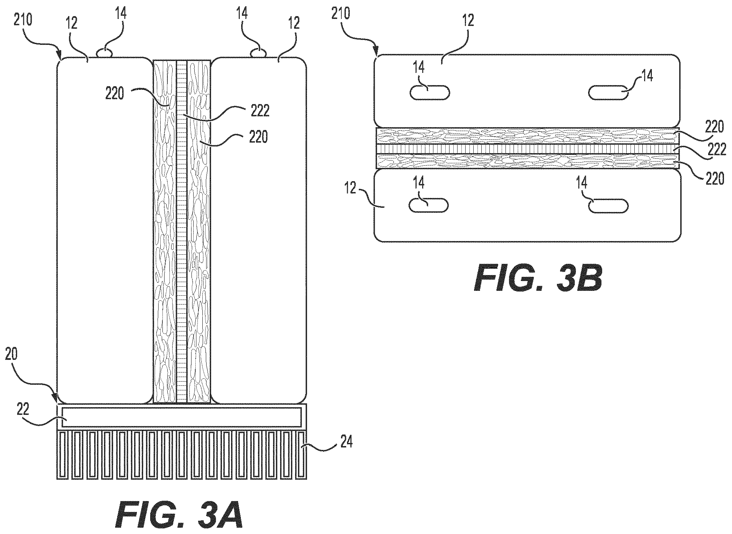

FIGs. 3A - 3B show cut-away side and top views of a third battery pack 210 of the present disclosure. The third battery pack 210 may be similar or identical to the second battery pack 110 except for a few differences described herein. The third battery pack 210 includes a hybrid thermal conductive layer 220, 222 that includes two aligned EG layers 220 separated by a thermal barrier 222. The aligned EG layers 220 may include EG material compacted by a vice to align graphene sheets therein. The aligned EG layers 220 may be anisotropic, having significantly higher heat transmission in a first direction than in a second direction perpendicular to the first direction. The first direction may correspond to the aligned graphene sheets. The aligned EG layers 220 may each be impregnated with a PCM material, such as an organic and/or inorganic PCM material. The thermal barrier 222 may be a relatively thin layer of a material having a relatively low capacity to transfer heat, such as Aerogel. The third battery pack 210 may, therefore, simultaneously enhance heat dissipation to the heat sink 20 and retard excess thermal exchange amongst adjacent ones of the battery cells 12. Vice compaction may be used to align the graphene sheets for conducting heat primarily in a direction toward the heat sink 20. A thin laminate of the thermal barrier 222 is sandwiched between two EG/PCM composites 220.

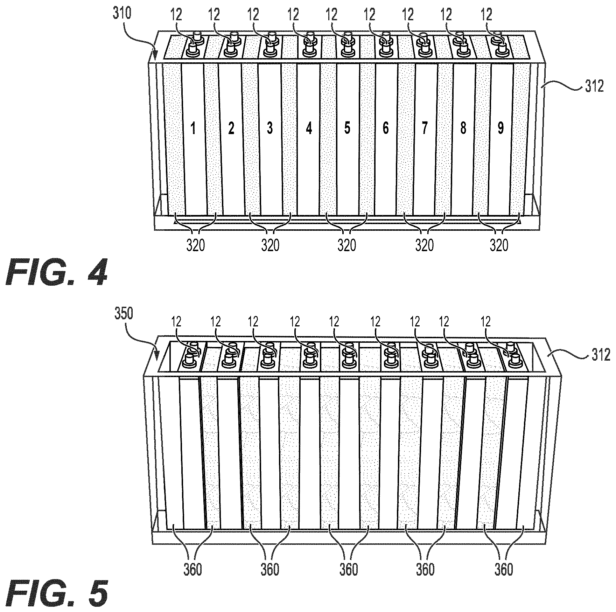

FIG. 4 shows a fourth battery pack 310. The fourth battery pack 310 includes a case 312 that provides a liquid-tight seal. The case 312 may be made of a polymer, such as acrylic. In some embodiments, one or more parts of the case 312 may be made of a thermally-conductive material, such as metal. The case 312 of the fourth battery pack 310 contains nine prismatic lithium ion manganese oxide battery (LMO) battery cells 12 each separated by a thermal conductive layer 320 that includes a composite PCM of Copper (Cu) foam and paraffin.

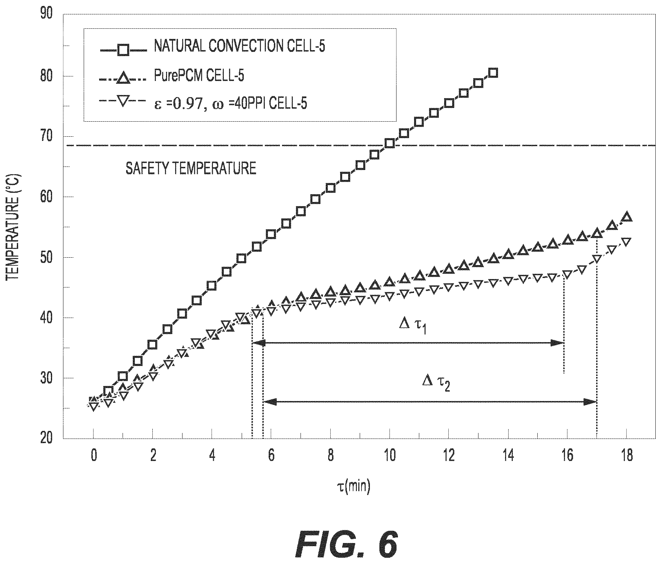

FIG. 5 shows a fifth battery pack 350. The fifth battery pack 350 may be similar or identical to the fourth battery pack 310 except for differences described herein. The fifth battery pack 350 includes a case 312 that contains nine prismatic LMO battery cells 12 each separated by a thermal conductive layer 360 of pure paraffin PCM. FIG. 6 shows a graph illustrating temperature as a function of time for the fourth and fifth battery packs and for another battery pack with natural convection cooling.

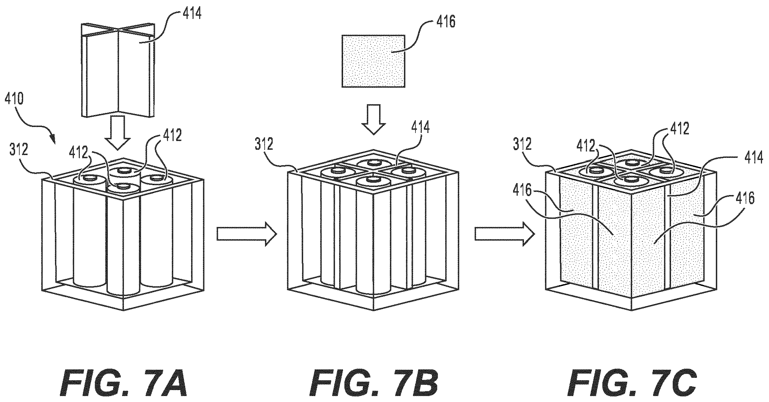

FIGS. 7A - 7C show various assembly steps of a sixth battery pack 410. The sixth battery pack 410 includes a case 312 containing four cylindrical battery cells 412. The sixth battery pack 410 also includes a thermal barrier 414 disposed between the four cylindrical battery cells 412. The thermal barrier 414 may include an Aerogel felt. A PCM filling 416, such as EG permeated with PCM material, such as an organic and/or inorganic PCM material, fills the spaces around the four cylindrical battery cells 412 and aids heat transfer from each of the four cylindrical battery cells 412 to the case 312.

The present disclosure provides a battery pack with an EG/PCM/Aerogel thermal conductive layer. The EG/PCM/Aerogel thermal conductive layer may significantly reduce chances of ignition and/or the severity of a fire resulting from the thermal runaway condition.

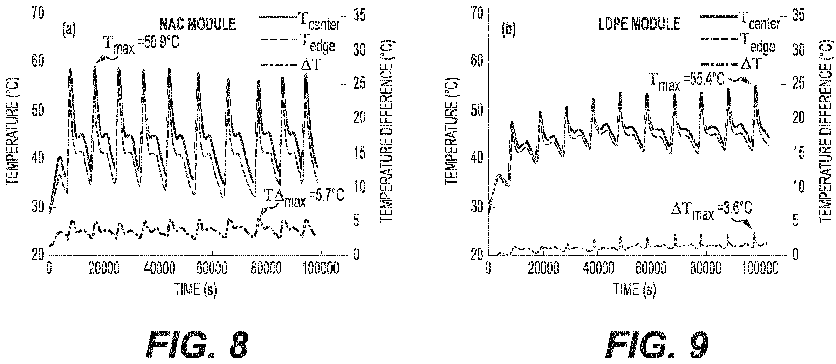

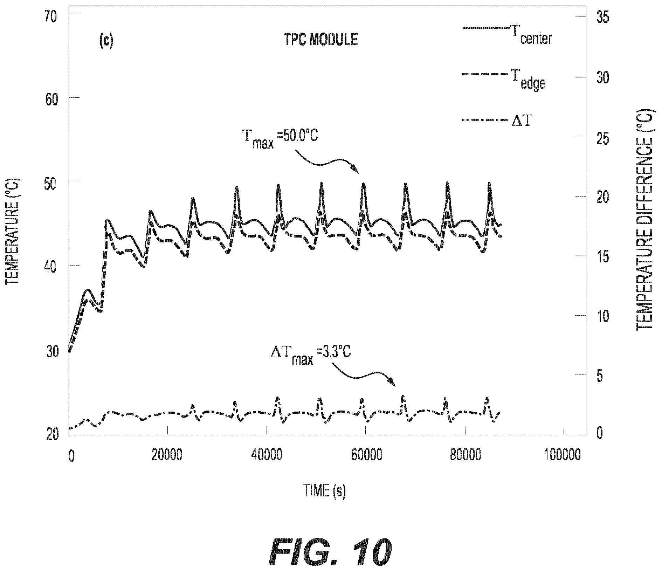

FIG. 8 shows a graph of temperature over time for a battery module with natural air convection (NAC) cooling. FIG. 9 shows a graph of temperature over time for a battery module with a cooling jacket of a rigid block-type LDPE material. FIG. 10 shows a graph of temperature over time for a battery module with a cooling jacket of a flexible composite phase-change material.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A battery pack (10; 110; 210; 310; 350; 410) comprising:
a plurality of battery cells (12);
a thermal conductive layer (30; 120; 220, 222; 320; 360) disposed between two battery cells (12) of the plurality of battery cells (12) and configured to transfer heat from each of the two battery cells (12), wherein the thermal conductive layer (30; 120; 220, 222; 320; 360) includes expanded graphite (EG) impregnated with a phase change material (PCM).

2. The battery pack (10; 110; 210; 310; 350; 410) of Claim 1, wherein the thermal conductive layer (30; 120; 220, 222; 320; 360) further includes a binder of styrene butadiene rubber (SBR).

3. The battery pack (10; 110; 210; 310; 350; 410) of Claim 2, wherein the thermal conductive layer (30; 120; 220, 222; 320; 360) includes the EG and the SBR with a 1:1 weight ratio.

4. The battery pack (10; 110; 210; 310; 350; 410) of any one of Claims 1 to 3, wherein the expanded graphite (EG) is anisotropic to define a relatively high in-plane thermal conductivity in a first direction and a relatively low out-of-plane thermal conductivity in a second direction perpendicular to the first direction.

5. The battery pack (10; 110; 210; 310; 350; 410) of any one of Claims 1 to 4, wherein the thermal conductive layer (30; 120; 220, 222; 320; 360) further includes a thermal insulating barrier (222) sandwiched between two layers of the EG impregnated with the PCM.

6. The battery pack (10; 110; 210; 310; 350; 410) of Claim 5, wherein the thermal insulating barrier (222) includes Aerogel.

7. The battery pack (10; 110; 210; 310; 350; 410) of any one of Claims 1 to 6, wherein the thermal conductive layer (30; 120; 220, 222; 320; 360) further includes a polymer additive to increase flexibility.

8. The battery pack (10; 110; 210; 310; 350; 410) of Claim 7, wherein the polymer additive includes low-density Polyethylene (LDPE).

9. The battery pack (10; 110; 210; 310; 350; 410) of any one of Claim 1 to 8, wherein the PCM includes a paraffin-based material.

10. The battery pack (10; 110; 210; 310; 350; 410) of any one of Claims 1 to 9, wherein the PCM includes an inorganic PCM material.

11. The battery pack (10; 110; 210; 310; 350; 410) of Claim 10, wherein the inorganic PCM material includes a salt hydrate.

12. The battery pack (10; 110; 210; 310; 350; 410) of any one of Claims 1 to 11, wherein each battery cell of the plurality of battery cells (12) has a cylindrical shape, and wherein the thermal conductive layer (30; 120; 220, 222; 320; 360) is configured as a jacket that wraps annularly about each battery cell of the plurality of battery cells (12).

13. The battery pack (10; 110; 210; 310; 350; 410) of any one of Claims 1 to 12, further comprising a case (312) surrounding the plurality of battery cells (12), and wherein the battery pack (10; 110; 210; 310; 350; 410) is configured to transfer heat to the case (312) and away therefrom by forced air cooling (FAC).

14. The battery pack (10; 110; 210; 310; 350; 410) of any one of Claims 1 to 13, wherein each battery cell of the plurality of battery cells (12) has one of a prismatic or a pouch shape, and wherein the thermal conductive layer (30; 120; 220, 222; 320; 360) is configured as a flat plate disposed between adjacent ones of the plurality of battery cells (12).

15. The battery pack (10; 110; 210; 310; 350; 410) of any one of Claims 1 to 14, further comprising a heat sink (20) extending perpendicularly to the thermal conductive layer (30; 120; 220, 222; 320; 360) and configured to dissipate heat therefrom.
